# EUROPÄISCHE PATENTSCHRIFT

(11) **EP 3 085 612 B1**
(45) Veröffentlichungstag und Bekanntmachung des Hinweises auf die Patenterteilung: **04.12.2019**
(21) Anmeldenummer: 16166205.1
(22) Anmeldetag: 20.04.2016
(51) Int. Cl.: B62K 25/28

(54) **FAHRRADRAHMEN**
BICYCLE FRAME
CADRE DE VELO

(30) Priorität: 23.04.2015 DE 202015002990 U
(43) Veröffentlichungstag der Anmeldung: 26.10.2016
(73) Patentinhaber: Canyon Bicycles GmbH, 56073 Koblenz (DE)
(72) Erfinder: Scheffer, Lutz, 82467 Garmisch-Partenkirchen (DE)
(74) Vertreter: dompatent von Kreisler Selting Werner - Partnerschaft von Patent- und Rechtsanwälten mbB

(56) Entgegenhaltungen:
- EP-A1- 2 535 252
- WO-A2-2008/027277
- DE-A1-102005 036 610
- DE-B3-102012 106 776
- DE-T2- 69 809 407
- DE-T2- 69 932 323
- DE-U1- 20 215 967
- US-A1- 2005 057 018
- US-A1- 2010 059 965
- PETER BARZEL ET AL: "Die neue Fahrradtechnik : Material, Konstruktion, Fertigung , Chapter 2: Fahrradtypen; Chapter 7: Fahrradgeometrie; Chapter 8: Federung; Chapter 9: Lenkung; Chapter 10: Laufräder", 1. Januar 2008 (2008-01-01), DIE NEUE FAHRRADTECHNIK : MATERIAL, KONSTRUKTION, FERTIGUNG, BVA - BIELEFELDER VERLAG GMBH & CO. KG, BIELEFELD, PAGE(S) 1 - 3,32, XP002736986, ISBN: 978-3-87073-322-3 * Seite 129 * * besonders relevant sind die Tabellen auf den Seiten 129 und 152 und Bild 72 auf Seite 152; Seite 150 - Seite 152; Abbildung 72 *

## Beschreibung

Die Erfindung betrifft einen gefederten Fahrradrahmen, insbesondere einen gefederten Fahrradrahmen für ein Mountainbike oder Trekking-Fahrrad. Fahrräder wie insbesondere Mountainbikes weisen häufig einen gefederten Hinterbau auf. Derartige Fahrräder weisen einen Fahrradrahmen mit einem Hauptrahmenelement sowie einen Hinterbau auf. Das Hauptrahmenelement weist hierbei insbesondere einen als Diamant-Rahmen ausgebildeten Rahmen auf, der ein Oberrohr, ein Unterrohr und ein Sattelrohr umfasst. Mit dem Hauptrahmenelement ist ein Hinterbau schwenkbar verbunden. Der Hinterbau ist an seinem Ausfallende mit einer Radnabe eines Hinterrades verbunden. Zur Federung des Hinterbaus ist dieser gelenkig mit dem Hauptrahmenelement verbunden, wobei zur Dämpfung ein Federelement vorgesehen ist. Eine besondere Ausgestaltung eines Fahrradrahmens ist ein sogenannter VierGelenker. Hierbei ist der Hinterbau bspw. über zwei Längslenker schwenkbar mit dem Hauptrahmenelement verbunden. Ein oberer Längslenker ist einerseits mit dem Hinterbau und andererseits mit dem Hauptrahmenelement schwenkbar verbunden. Der Längslenker weist ferner einen Ansatz auf, der mit einem ersten Ende des Federbeins verbunden ist, wobei das zweite Ende des Federbeins mit dem Hauptrahmenelement verbunden ist. Der obere Längslenker bildet somit zwei Gelenke des Vier-Gelenkers aus. Ein weiterer unterer Längslenker ist einerseits gelenkig mit dem Hinterbau und andererseits gelenkig mit dem Hauptrahmenelement verbunden. Hierdurch sind zwei weitere Gelenke des Vier-Gelenkers ausgebildet. Je nach geometrischer Ausgestaltung des Hinterbaus und Ausgestaltung und Anordnung an dem Längslenker können unterschiedliche Rahmengeometrien und somit unterschiedliche Fahreigenschaften realisiert werden.

Bei einem Fahrradrahmen mit gefedertem Hinterbau besteht die Problematik des Pedalrückschlags. Dieser wird dadurch hervorgerufen, dass sich beim Einfedern der Abstand zwischen dem Tretlager und den Ausfallenden vergrößert. Dies führt zu einem Zurückdrehen des Kettenblatts bzw. zu einem Drehen des Kettenblatts, um einen gewissen Winkel entgegen der antriebswirksamen Kurbelrotation. Hierdurch entsteht ein gegebenenfalls ungewünschter Pedalrückschlag.

Eine weitere Problematik besteht im sogenannten Squat. Hierunter wird die Einfederung des Hinterbaus aufgrund der beschleunigungsbedingten Radlaständerung verstanden. Der Antisquat ist dementsprechend die Unterdrückung der Einfederung beim Beschleunigen. Beim Beschleunigen tritt aufgrund der Einfederung und der auftretenden Kettenspannung eine Gegenkraft in der Kette auf. Diese wirkt der Beschleunigungskraft entgegen und wirkt sich insofern nachteilig auf die Beschleunigung aus. Eine bekannte Antisquat-Maßnahme besteht darin, dass der Kettenzug eine ausfedernde Kraft am Hinterbau erzeugt. Dies führt zwangsweise dazu, dass bei einem Einfedern des Hinterbaus ein verstärkter Kettenzug entsteht, welcher die Kurbel entgegen der Pedalierrichtung störenderweise zurückdreht. Dieses Verhalten wird als Pedalrückschlag bezeichnet. Der Pedalrückschlag und der verstärkte Kettenzug beim Einfedern stehen mechanisch gesehen nicht der Beschleunigung entgegen. Biomechanisch stört der Pedalrückschlag allerdings deutlich den Pedaliervorgang.

Um den Effekt des Pedalrückschlages zu reduzieren und dennoch ein wirksames Antisquat zu generieren, besteht die Möglichkeit das Tretlagergehäuse nicht fest am Hauptrahmenelement vorzusehen, sondern mit dem unteren Längslenker starr zu verbinden. Dies bewirkt, dass sich die Lage des Tretlagergehäuses beim Ein- und Ausfedern verändert. Eine derartige Anordnung des Tretlagergehäuses ist bspw. aus DE 10 2005 036 610 bekannt.

Aufgabe der Erfindung ist es einen gefederten Fahrradrahmen insbesondere für ein Mountainbike oder ein Trekking-Fahrrad zu schaffen, der bei Vorsehen eines gefederten Hinterbaus eine positive Fahrdynamik aufweist.
Die Lösung der Aufgabe erfolgt erfindungsgemäß durch die Merkmale des Anspruchs 1.

Ein gefederter Fahrradrahmen, bei dem es sich insbesondere um einen Fahrradrahmen für ein Mountainbike oder ein Trekking-Fahrrad mit gefedertem Hinterbau handelt, weist ein Hauptrahmenelement auf. Bei diesem handelt es sich insbesondere um einen sogenannten Diamant-Rahmen, wobei auch andere Rahmenausgestaltungen möglich sind. Insbesondere weist das Hauptrahmenelement ein Oberrohr, ein Unterrohr und ein Sattelrohr auf. Mit dem Hauptrahmenelement ist ein gefederter Hinterbau verbunden. Der Hinterbau weist üblicherweise ein Paar Kettenstreben sowie eine oder insbesondere ebenfalls ein Paar Sitzstreben auf. Die Kettenstreben weisen an dem in Fahrtrichtung nach hinten weisenden Ende ein Ausfallende auf. Dies dient zur Aufnahme der Hinterradnabe bzw. der Hinterradachse. Vorzugsweise vom Ausfallende ausgehend verläuft die mindestens eine, insbesondere zwei Sitzstreben vorzugsweise schräg nach oben in Richtung des Sattelrohrs. Vorzugsweise ist jeweils eine Kettenstrebe über eine Verbindungsstrebe mit einer Sitzstrebe verbunden. Insbesondere sind die drei Streben starr miteinander verbunden, wobei es des Weiteren bevorzugt ist, dass die drei Streben in Seitenansicht ein Dreieck bilden.

Zur Ausgestaltung eines gefederten Hinterbaus ist dieser bei der erfindungsgemäßen Ausgestaltung des Fahrradrahmens über zwei Längslenker mit dem Hauptrahmenelement verbunden. Der obere Längslenker ist über eine obere Rahmenachse schwenkbar mit dem Hauptrahmenelement verbunden. Bevorzugt ist der obere Längslenker zumindest innerhalb eines Winkelbereichs schwenkbar. Des Weiteren ist der obere Längslenker über eine obere Hinterbauachse schwenkbar mit dem Hinterbau verbunden. Die Verbindung zwischen dem Hinterbau und dem oberen Längslenker über die obere Hinterbauache ist hierbei vorzugsweise derart ausgebildet, dass die obere Hinterbauachse in montiertem Zustand zwischen dem Hinterrad und dem Sattelrohr des Hauptrahmenelements angeordnet ist. Des Weiteren ist es bevorzugt, dass mit dem oberen Längslenker ein Ende eines Dämpfungselements verbunden ist. Hierzu kann der obere Längslenker bspw. einen zusätzlichen Ansatz aufweisen. Ein zweites Ende des Dämpfungselements ist sodann vorzugsweise mit dem Hauptrahmenelement verbunden. Das Dämpfungselement kann jedoch auch zwischen dem unteren Längslenker und einem Element des Hauptrahmens angeordnet sein.

Der untere Längslenker ist bei dem erfindungsgemäßen Fahrradrahmen vorzugsweise über eine untere Rahmenachse schwenkbar mit dem Hauptrahmenelement und über eine untere Hinterbauachse schwenkbar mit dem Hinterbau verbunden. Ein wesentliches Element der Erfindung besteht darin, dass ein Tretlagergehäuse mit dem unteren Längslenker starr verbunden ist. Dies bewirkt beim Ein- und Ausfedern des Hinterbaus eine Lageveränderung des Tretlagergehäuses. Hierdurch kann bei entsprechender geometrischer Ausgestaltung ein positiver Einfluss auf die Fahrdynamik, insbesondere den Pedalrückschlag und den Anti-Squat genommen werden. Bei einem derartigen mit dem unteren Längslenker verbundenen Tretlagergehäuse handelt es sich um ein sogenanntes Floating-Bottom-Bracket.

Eine Verbindungslinie zwischen der den oberen Längslenker mit dem Hauptrahmenelement verbindenden oberen Rahmenachse und der den oberen Längslenker mit dem Hinterbau verbindenden oberen Hinterbauachse bildet einen oberen Polstrahl. Der obere Polstrahl ist erfindungsgemäß derart ausgerichtet, dass er oberhalb des die Hinterradachse tragenden Ausfallendes des Hinterbaus verläuft. Dies ist erfindungsgemäß im ausgefedertem Zustand der Fall. Erfindungsgemäß verläuft der obere Polstrahl in Fahrtrichtung steigend.

Durch die vorstehend beschriebene Ausgestaltung eines gefederten Fahrradrahmens kann bereits eine verbesserte Fahrdynamik erzielt werden, wobei insbesondere aufgrund der Kombination aus der Lage des oberen Polstrahls oberhalb des Ausfallendes und des mit dem unteren Längslenker verbundenen Tretlagers eine Fahrdynamikverbesserung erzielt werden kann. Insbesondere kann hierdurch der Pedalrückschlag verringert werden, wobei zu berücksichtigen ist, dass gegebenenfalls ein geringer Pedalrückschlag vom Fahrer nicht als störend empfunden wird. Des Weiteren ist zu berücksichtigen, dass die Größe des Pedalrückschlags auch von der Ganglage der Kette abhängig ist. Auch kann durch die erfindungsgemäße Ausgestaltung der Anti-Squat positiv beeinflusst werden.

In einer bevorzugten Weiterbildung des erfindungsgemäßen Fahrradrahmens beträgt ein Abstand der unteren Rahmenachse des unteren Längslenkers zu einer Mittelachse des Tretlagergehäuses 50mm bis 100mm, insbesondere 50mm bis 70mm. Insbesondere ist der Abstand zwischen der unteren Rahmenachse und der Mittelachse des Tretlagergehäuses unabhängig vom Einfederzustand konstant. Hierdurch ist bewirkt, dass sich das Tretlager bei Federbewegungen des Hinterbaus auf einer Kreislinie mit einem entsprechenden Radius bewegt. Durch die entsprechende Bewegung erfolgt eine Abstandsveränderung zwischen dem hinteren Ausfallende und der Mittelachse des Tretlagergehäuses. Dies bewirkt in Abhängigkeit des Einfederzustands eine Veränderung des Pedalrückschlages und auch das Anti-Squat.

Des Weiteren ist es bevorzugt, dass die definierte Geometrie des unteren Längslenkers insbesondere in Abhängigkeit des maximalen Federwegs des Dämpfungselements gegeben ist. Erfindungsgemäß ist es bevorzugt, dass der Abstand der unteren Rahmenachse des unteren Längslenkers zur unteren Hinterbauachse des unteren Längslenkers 80% bis 160%, insbesondere 100% bis 140% eines vorgesehenen Federwegs beträgt. Der Federweg ist der beim Einfedern maximale resultierende Federweg der Hinterradachse.

Bei einer weiteren bevorzugten Weiterbildung der Erfindung ist ein unterer Polstrahl durch eine Verbindungslinie der unteren Rahmenachse des unteren Längslenkers und der unteren Hinterbauachse des unteren Längslenkers gebildet. Der untere Polstrahl weist in bevorzugter Ausführungsform erfindungsgemäß in ausgefedertem Zustand des Hinterbaus einen Winkel von 20° bis 40° insbesondere 25° bis 35° zur Horizontalen auf. Besonderes bevorzugt ist es hierbei, dass auch der untere Polstrahl in Fahrtrichtung steigend ausgebildet ist. Hierdurch kann eine weitere Verbesserung der Fahrdynamik erzielt werden.

Des Weiteren ist es zur Verbesserung der Fahrdynamik bevorzugt, dass der obere Polstrahl und der untere Polstrahl zueinander einen Winkel von weniger als 10°, insbesondere weniger als 5°, insbesondere in ausgefedertem Zustand des Hinterbaus aufweisen. Besonders bevorzugt ist es, dass die beiden Polstrahlen in ausgefedertem Zustand des Hinterbaus zueinander parallel verlaufen.

Auf Basis der beiden Polstrahlen kann ein Gesamtpolstrahl ermittelt werden. Der Gesamtpolstrahl des Fahrradrahmens ist durch eine Linie zwischen der Hinterradachse und einem Schnittpunkt des oberen und des unteren Polstrahls gebildet. Bei zueinander parallel verlaufendem unteren und oberen Polstrahl ist der Gesamtpolstrahl ein ebenfalls parallel zu den beiden anderen Polstrahlen verlaufender Strahl durch die Hinterradachse. Bevorzugt ist es, dass der Gesamtpolstrahl in Fahrtrichtung steigend ist. In einem Einfederungszustand, der sich unter der statischen Last des Fahrers ergibt (ca. 20-30% des Gesamtfederweges), dem sogenannten SAG ist bevorzugt, dass der Gesamtpolstrahl zu einer Horizontalen einen Winkel von 5° - 30°, insbesondere von 10° bis 15° aufweist.

Unter dem SAG wird ein Zustand verstanden, bei dem das Fahrrad durch das Gewicht des Fahrers statisch belastet ist. In diesem Zustand ist das Federelement derart eingestellt, dass eine gewisse Kompression (üblicherweise 20-30% des Gesamtfederweges) des Federelements gegeben ist. Dies ist erforderlich um bspw. beim Überfahren von Schlaglöchern und dergleichen ein Ausfedern des Hinterbaus zu ermöglichen. Der SAG wird in Abhängigkeit des Fahrergewichts derart eingestellt, dass bei üblicher Nutzung des Fahrrads ein Durchschlagen des Dämpferelements vermieden ist. Hierbei erfolgt auch eine Einstellung der Dämpfungshärte bspw. über Druckluft, zum Beispiel den inneren Luftdruck des Luftfederbeins (ca. 5-15 bar). Bei einem Schraubenfederbein erfolgt die Einstellung über die Anpassung der Federsteifigkeit der Schraubenfeder und bei kleineren Anpassungen über die Vorspannung der Schraubenfeder.

Die Erfindung besteht vorzugsweise insbesondere darin, dass ein wirksames Antisquat alleinig durch einen großen Schrägfederwinkel (Gesamtpolstrahl ist 5° bis 25° ansteigend gegenüber der Fahrtrichtung im SAG) erzeugt wird. Ausgefedert ist der Gesamtpolstrahl 20° bis 35° ansteigend. Die Neigung des Gesamtpolstrahls entspricht dem Schrägfederwinkel.

Die geometrische Anordnung und Ausgestaltung des Fahrradrahmens insbesondere des Hinterbaus und der beiden Längslenker ist vorteilhaft aufeinander abgestimmt. Insofern ist insbesondere eine Kombination der vorstehend beschriebenen Ausführungsformen vorteilhaft.

Des Weiteren ist es insbesondere vorteilhaft, wenn der Abstand zwischen der oberen Rahmenachse und der oberen Hinterbauachse des oberen Längslenkers kleiner ist als der Abstand der unteren Rahmenachse und der unteren Hinterbauachse des unteren Längslenkers. Vorzugsweise beträgt dieser Abstand beim oberen Längslenker 25%-100% und insbesondere 30%-60% des entsprechenden Achsabstands am unteren Längslenker.

Eine positive Fahrdynamik kann auch dadurch erzielt werden, dass der obere Polstrahl in ausgefedertem Zustand einen vertikalen Abstand zum Ausfallende des Hinterbaus aufweist, der größer als 50% des maximalen Federwegs des Dämpfungselements ist. Vorzugsweise ist dieser Abstand größer als 60mm. Vorzugsweise beträgt der vertikale Abstand des oberen Polstrahls zum Ausfallende 25%-150% und besonders bevorzugt 50% bis 75% des maximalen Federwegs des Dämpfungselements.

Eine bevorzugte Weiterbildung besteht darin, dass eine Mittelachse des Tretlagergehäuses im SAG bei einer Abweichung von ± 20°, insbesondere ± 10° vertikal unter der unteren Rahmenachse liegt.

Weiterhin ist es besonders bevorzugt, dass die untere Hinterbauachse des unteren Längslenkers derart angeordnet ist, dass sie innerhalb eines Radkreises eines montierten Hinterrades angeordnet ist. Bei einem an den hinteren Ausfallenden über die Hinterradachse montierten Hinterrad liegt die untere Hinterbauachse somit in besonderes bevorzugter Ausgestaltung innerhalb des Radkreises und bevorzugt innerhalb des Felgenrings. Bevorzugt ist es hierbei wiederum, dass die untere Hinterbauachse nicht zu nahe am Ausfallende liegt. Besonders bevorzugt ist es, dass die Hinterbauachse nahe des Radkreises angeordnet ist.

Eine weitere bevorzugte Gestaltung und Anordnung der beiden Längslenker ist derart, dass sich die beiden Längslenker beim Ein- und Ausfedern des Dämpfungselements gleichsinnig drehen. Besonders bevorzugt ist es, dass beim Einfedern ein Drehen der beiden Längslenker in Fahrtrichtung, das heißt im Uhrzeigersinn und beim Ausfedern entgegen dem Uhrzeigersinn erfolgt.

Bei einer weiteren bevorzugten Ausführungsform führt die Raderhebungsbahn bezogen auf die Fahrtrichtung schräg nach hinten. Insbesondere im SAG weist die Raderhebungsbahn einen Winkel von weniger als 90°, insbesondere 65° - 80° und besonders bevorzugt 70° - 75° zur Horizontalen auf.

Durch eine derartig schräg nach hinten führende Raderhebungsbahn kann die Antisquatwirkung des Fahrwerkes erheblich gesteigert werden. Gegenüber der erfindungsgemäßen Raderhebungsbahn weisen übliche Ein- oder Viergelenker eine Raderhebungsbahn von ca. 90° zur Horizontalen im SAG auf.

Bei erfindungsgemäßen gefederten Fahrradrahmen, insbesondere den beschriebenen erfindungsgemäßen Weiterbildungen, ist die Fahrdynamik deutlich verbessert. Insbesondere sind unerwünschte Federbewegungen wie bspw. unerwünschtes Einfedern beim Antreten vermieden oder zumindest stark reduziert. Des Weiteren induziert eine Hinterbaubewegung bei der erfindungsgemäßen Ausgestaltung des gefederten Fahrradrahmens keine oder zumindest eine deutlich verringerte störende Pedalbewegung. Erfindungsgemäß ist dieser sehr geringe oder insbesondere nicht auftretende Pedalrückschlag unabhängig von der gewählten Gangkombination stets sehr gering. Dies ist insbesondere bei aktiv arbeitender Federung besonders günstig, um aus biometrischer Sicht ein hohes Antriebsmoment übertragen zu können. Trotz der erfindungsgemäßen erheblichen Reduzierung dieser Pedalbewegung durch eine gezielte Entkopplung findet ein vom Kettenzug unabhängiger signifikanter Anti-Squat Effekt statt. Insbesondere liegt der Antisquat-Effekt erfindungsgemäß zwischen 50% und 150%, insbesondere je nach eingelegtem Gang zwischen 80% und 120%. Der Antisquatwert wird hierbei je nach Berechnungsmethode in Prozent angegeben. 100% Antisquat bedeutet vollständig nickfreies Fahrwerk. Werte über 100% bedeuten eine Überkompensation (Ausfedern beim Beschleunigen). Werte von unter 100% bedeuten eine nur teilweise Kompensation (hintere Federung federt leicht ein beim Bescheunigen). Dieser Anti-Squat Effekt kann insbesondere durch den erfindungsgemäßen Schrägfederwinkel erzielt werden. Bei dem Schrägfederwinkel handelt es sich um den Winkel des Gesamtpolstrahls zu einer Horizontalen, der erfindungsgemäß vorzugsweise im SAG im Bereich von 5° bis 25°, insbesondere 10° bis 15° liegt.

Ein weiterer Vorteil des erfindungsgemäßen gefederten Fahrradrahmens besteht darin, dass aufgrund der Entkopplung des Kettenzugs von der Federbewegung die Federungsverhärtung niedriger ist. Dies liegt darin begründet, dass die Masse des auf der Pedalkurbel stehenden Fahrers nicht wie sonst üblich angehoben werden muss. Ferner besteht der Vorteil, dass gegenüber herkömmlichen Federsystemen bei dem erfindungsgemäßen Fahrradrahmen ein signifikanter Anti-Squat Effekt erreicht werden kann, ohne einen nicht unerheblichen Pedalrückschlag akzeptieren zu müssen. Erfindungsgemäß kann ein signifikanter Anti-Squat Effekt bei keinem oder allenfalls geringem Pedalrückschlag realisiert werden. Durch die erfindungsgemäße Geometrie und Ausgestaltung des Fahrradrahmens, insbesondere in den bevorzugten Weiterbildungen, kann ein erheblicher Anti-Squat Effekt unabhängig vom aufgelegten Gang erzielt werden.

Aufgrund der Integration des Tretlagergehäuses in den unteren Längslenker kann ein zumindest im Wesentlichen konstanter Abstand zwischen der Hinterradachse und der Kurbelachse realisiert werden. Insofern ist es möglich anstelle einer Kette einen Zahnriemenantrieb vorzusehen.

Ferner besteht bei dem erfindungsgemäßen gefederten Fahrradrahmen der Vorteil, dass ein sogenanntes Federungsklappern nicht mehr auftritt oder zumindest stark reduziert ist. Bei herkömmlichen Fahrradrahmen tritt aufgrund des sich verändernden Abstandes zwischen der Hinterradachse und der Tretkurbelachse bei Federbewegungen eine Bewegung des Kettenzugs auf. Diese erfolgt mit einem hörbaren Geräusch eines Anschlagens an die Rücklaufsperre des Freilaufs am Hinterrad. Aufgrund des im Wesentlichen konstanten Abstands zwischen Hinterradnabe und Pedalachse bei dem erfindungsgemäßen Fahrradrahmen, tritt das Klappern nicht auf oder ist zumindest stark reduziert.

Ein weiterer Vorteil des erfindungsgemäßen gefederten Fahrradrahmens, der insbesondere durch den großen Schrägfederwinkel realisiert ist, besteht darin, dass Impulse, die beim Überrollen von Hindernissen auftreten, gut durch die Federung absorbiert werden. Dies ist darin begründet, dass die Kraftrichtung des Schlagimpulses im Wesentlichen der Ausweichrichtung des Hinterrades entspricht.

Ein weiterer Vorteil des erfindungsgemäßen Schrägfederwinkels besteht darin, dass bspw. beim Wiegetritt auftretende dynamische, vorwiegend vertikal erfolgende Fahrerbewegungen in geringem Maße in die Federung eingeleitet werden.

Nachfolgend wird die Erfindung anhand einer bevorzugten Ausführungsform unter Bezugnahme auf die anliegenden Zeichnungen näher erläutert.

Es zeigen:

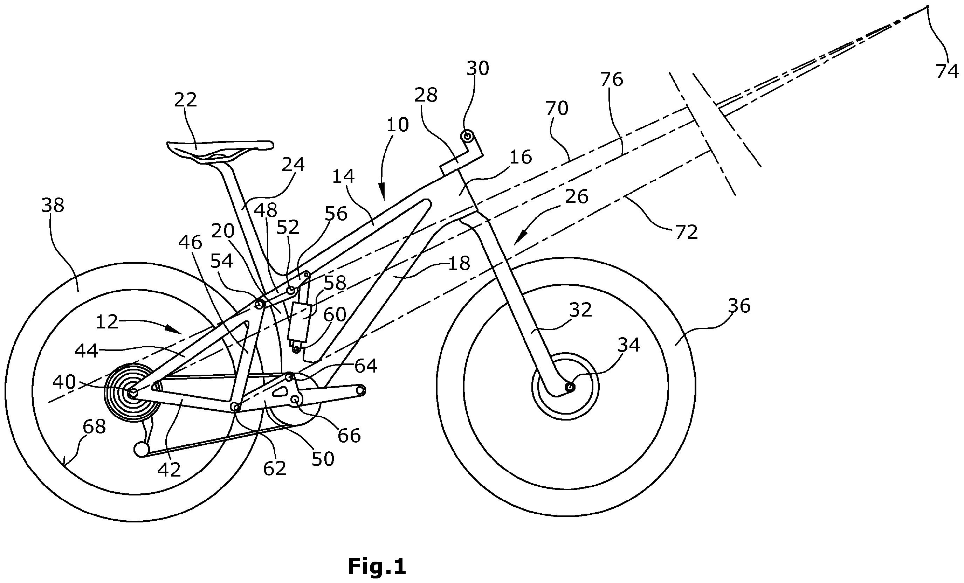

Fig. 1 eine schematische Seitenansicht eines Fahrrads mit erfindungsgemäßem Fahrradrahmen in ausgefedertem Zustand und
Fig. 2 eine Seitenansicht des in Fig. 1 dargestellten Fahrrads im SAG.

Im dargestellten Ausführungsbeispiel ist ein Hauptrahmenelement 10 mit einem Hinterbau 12 gelenkig verbunden. Das Hauptrahmenelement 10 weist im dargestellten Ausführungsbeispiel ein Oberrohr 14, ein über ein Gabelrohr 16 mit dem Oberrohr verbundenes Unterrohr 18, sowie ein das Unterrohr 18 mit dem Gabelrohr 16 verbindendes Sattelrohr 20 auf. Das Sattelrohr 20 dient zur Aufnahme eines einen Sattel 22 tragenden Sattelstützrohrs 24. Im Gabelrohr 16 ist eine im erfindungsgemäßen Ausführungsbeispiel federnd ausgebildete Vorderradgabel 26 angeordnet und über einen Lenkervorbau 28 mit einem Lenker 30 verbunden. An den beiden Gabelbeinen 32 ist eine Vorderradachse eines Vorderrads 36 befestigt.

An den hinteren Ausfallenden 40 ist über eine Hinterradachse ein Hinterrad 38 befestigt. Die hinteren Ausfallenden 40 sind bei einander gegenüberliegenden Kettenstreben 42 gegenüberliegend angeordnet. Im dargestellten Ausführungsbeispiel sind insbesondere auch zwei einander gegenüberliegende Sitzstreben 44 vorgesehen, die im Bereich des Ausfallendes 40 jeweils mit der entsprechenden Kettenstrebe 42 insbesondere starr verbunden sind. Die Sitzstreben 44 sind mit den Kettenstreben 42 ferner jeweils über eine Verbindungsstrebe 46 insbesondere starr miteinander verbunden, wobei die drei Streben 42, 44, 46 in Seitenansicht ein Dreieck bilden.

Des Weiteren ist ein oberer Längslenker 48 sowie ein unterer Längslenker 50 mit dem Hautrahmenelement 10 verbunden. Der obere Längslenker 48 ist im dargestellten Ausführungsbeispiel über eine obere Rahmenachse 52 schwenkbar mit dem Oberrohr 14 des Hauptrahmenelements 10 verbunden. Eine weitere schwenkbare Verbindung ist durch eine obere Hinterbauachse 54 verwirklicht, die eine schwenkbare Verbindung zwischen dem oberen Längslenker 48 und dem Hinterbau 12 ausbildet. Des Weiteren weist der obere Längslenker 48 einen Ansatz 56 auf. An einem freien Ende des Ansatzes 56 ist wiederum schwenkbar ein Dämpfungselement 58 mit dem Ansatz 56 verbunden. Ein im dargestellten Ausführungsbeispiel unteres Ende 60 des Dämpfungselementes 58 ist mit dem Hauptrahmenelement mit einem Ansatz des Sattelrohrs 20 verbunden.

Die obere Hinterbauachse 54 ist insbesondere mit den einander gegenüberliegenden Sitzstreben 44 verbunden, wobei eine Verbindung vorzugsweise im Bereich der Verbindung zwischen den Sitzstreben 44 und den Verbindungsstreben 46 erfolgt. Der untere Längslenker 50 ist über eine untere Hinterbauachse 62 mit dem Hinterbau 12 schwenkbar verbunden, wobei die Verbindung insbesondere mit der Kettenstrebe 42 und im dargestellten Ausführungsbeispiel im Bereich der Verbindung zwischen der Kettenstrebe 42 und der Verbindungsstrebe 46 erfolgt.

Ferner ist der untere Längslenker 50 über eine untere Rahmenachse 64 schwenkbar mit dem Hauptrahmenelement 10 insbesondere im Bereich der Verbindungen zwischen Sattelrohr und Unterrohr 18 verbunden.

Ein Tretlagergehäuse 66, das zur Aufnahme der Lagerung der Tretkurbel dient ist im dargestellten Ausführungsbeispiel starr mit dem unteren Längslenker 50 verbunden bzw. integraler Bestandteil des unteren Längslenkers 50. Hierbei kann der untere Längslenker aus Steifigkeitsgründen wie dargestellt dreieckförmig gebildet sein.

In der dargestellten, besonderes bevorzugten Ausführungsform des erfindungsgemäßen gefederten Fahrradrahmens ist die untere Hinterbauachse 52 durch zwei einander gegenüberliegende Gelenke ausgebildet, die jeweils in Fahrtrichtung seitlich neben dem Hinterrad 38 angeordnet sind. Hierbei ist es bevorzugt, dass entsprechend der Darstellung die untere Hinterbauachse 62 innerhalb eines von einer Felge des Hinterrads 38 gebildeten Radkreises 68 ausgebildet ist.

Eine Verbindungslinie durch die obere Hinterbauachse 54 und die obere Rahmenachse 52 des oberen Längslenkers 48 bildet einen oberen Polstrahl 70. Eine Verbindungslinie zwischen der unteren Hinterbauachse 62 und der unteren Rahmenachse 64 des unteren Längslenkers 50 bildet einen unteren Polstrahl 72.

Wenn die beiden Polstrahlen 70, 72 in einem Winkel zueinander angeordnet sind, ergibt sich ein im dargestellten Ausführungsbeispiel in Fahrtrichtung vor dem Lenker 30 liegender Schnittpunkt 74. Der Winkel zwischen den beiden Polstrahlen 70, 72, ist vorzugsweise kleiner als 10°, sofern die Polstrahlen nicht entsprechend einer besonders bevorzugten Ausführungsform zueinander parallel verlaufen.

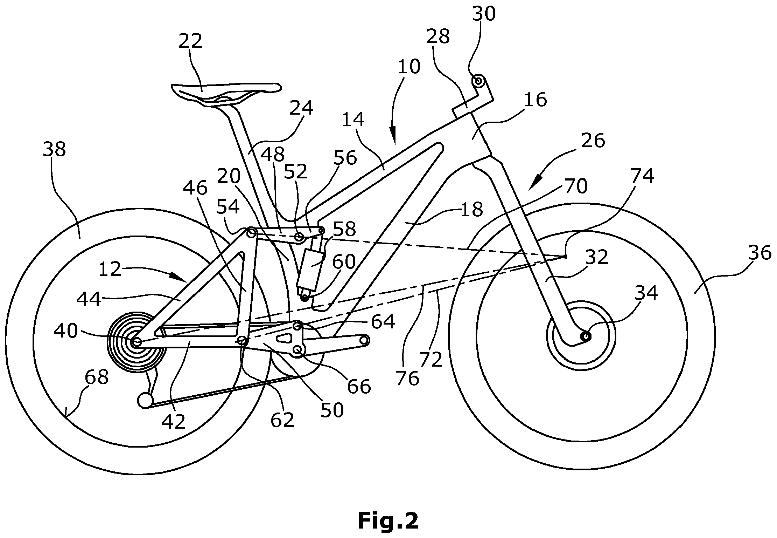

Eine Verbindungslinie zwischen den die Hinterachse aufnehmenden Ausfallenden 40 und dem Schnittpunkt 74 bildet den gemeinsamen Polstrahl 76 aus. Im geringfügig eingefederten Zustand, das heißt im SAG weist der gemeinsame Polstrahl 76 zu einer Horizontalen einen Winkel von 10° bis 15° auf. (Fig. 2)

## Patentansprüche

1. Gefederter Fahrradrahmen, insbesondere gefederter Mountainbike-Fahrradrahmen, mit einem Hauptrahmenelement (10),
einem mit dem Hauptrahmenelement (10) zur Ausgestaltung eines gefederten Fahrradrahmens beweglich verbundenen Hinterbau (12), einem den Hinterbau (12) mit dem Hauptrahmenelement (10) verbindenden oberen Längslenker (48) und unteren Längslenker (50) und einem Federungselement, wobei der obere Längslenker (48) über eine obere Rahmenachse (52) mit dem Hauptrahmenelement (10) und über eine obere Hinterbauachse (54) mit dem Hinterbau (12) schwenkbar verbunden ist,
wobei eine Verbindungslinie zwischen der oberen Rahmenachse (52) und der oberen Hinterbauachse (54) einen oberen Polstrahl (70) ausbildet, der im ausgefederten Zustand oberhalb eines Ausfallendes (40) des Hinterbaus (12) verläuft und wobei eine Verbindungslinie zwischen einer unteren Rahmenachse (64) und einer unteren Hinterbauachse (62) einen unteren Polstrahl (72) bildet, wobei der untere Längslenker (50) mit einem Tretlagergehäuse (66) starr verbunden ist,
**dadurch gekennzeichnet, dass**
der obere Polstrahl (70) im ausgefederten Zustand in Fahrtrichtung steigend verläuft.

2. Gefederter Fahrradrahmen nach Anspruch 1, **dadurch gekennzeichnet, dass** der untere Längslenker (50) über die untere Rahmenachse (64) schwenkbar mit dem Hauptrahmenelement (10) und über die untere Hinterbauachse (62) schwenkbar mit dem Hinterbau (12) verbunden ist.

3. Gefederter Fahrradrahmen nach Anspruch 2, **dadurch gekennzeichnet, dass** der Abstand der unteren Rahmenachse (64) zur Mittelachse des Tretlagergehäuses (66) 50mm bis 100mm, insbesondere 50 bis 70mm beträgt.

4. Gefederter Fahrradrahmen nach Anspruch 2 oder 3, **dadurch gekennzeichnet, dass** der Abstand zwischen der unteren Rahmenachse (64) und der unteren Hinterbauachse (62) 80% bis 160%, insbesondere 100% bis 140% eines resultierenden Federweges des Federelements am Hinterrad beträgt.

5. Gefederter Fahrradrahmen nach einem der Ansprüche 2 bis 4, **dadurch gekennzeichnet, dass** eine Verbindungslinie zwischen der unteren Rahmenachse (64) und der unteren Hinterbauachse (62) einen unteren Polstrahl (72) ausbildet, der in ausgefedertem Zustand zur Horizontalen einen Winkel von 20° bis 40°, vorzugsweise von 25° bis 35° aufweist.

6. Gefederter Fahrradrahmen nach einem der Ansprüche 2 bis 5, **dadurch gekennzeichnet, dass** der Abstand zwischen der oberen Rahmenachse (52) und der oberen Hinterbauachse (54) 25% bis 100%, insbesondere 30% bis 60% des Abstands der unteren Rahmenachse (64) zur unteren Hinterbauachse (62) beträgt und/oder dass der Abstand zwischen der oberen Rahmenachse (52) zur oberen Hinterbauachse (54) zwischen 80mm und 150mm beträgt.

7. Gefederter Fahrradrahmen nach Anspruch 5 oder 6, **dadurch gekennzeichnet, dass** der obere Polstrahl (70) gegenüber dem unteren Polstrahl (72) einen Winkel von weniger als 10° insbesondere weniger als 5° aufweist und besonders bevorzugt die beiden Polstrahle (70, 72) parallel zueinander verlaufen.

8. Gefederter Fahrradrahmen nach einem der Ansprüche 1 bis 7, **dadurch gekennzeichnet, dass** der obere Polstrahl (70) in ausgefedertem Zustand einen vertikalen Abstand zu dem Ausfallende (40) des Hinterbaus (12) von mehr als 50% des Federwegs des Federungselements (58) und/oder mehr als 60 mm aufweist.

9. Gefederter Fahrradrahmen nach einem der Ansprüche 1 bis 8, **dadurch gekennzeichnet, dass** ein Gesamtpolstrahl (76) im SAG zu einer Horizontalen einen Winkel von 5° bis 25°, insbesondere 10° bis 15° aufweist, wobei der Gesamtpolstrahl (76) durch eine Linie zwischen der Hinterradachse und einem Schnittpunkt des oberen und des unteren Polstrahls gebildet ist.

10. Gefederter Fahrradrahmen nach einem der Ansprüche 1 bis 9, **dadurch gekennzeichnet, dass** die untere Hinterbauachse (62) innerhalb eines Radkreises (68) eines montierten Hinterrades (38) anordbar ist.

11. Gefederter Fahrradrahmen nach einem der Ansprüche 1 bis 10, **dadurch gekennzeichnet, dass** beim Ein-/Ausfedern die Drehbewegung beider Längslenker (48, 50) gleichsinnig ist.

12. Gefederter Fahrradrahmen nach einem der Ansprüche 1 bis 11, **dadurch gekennzeichnet, dass** eine Raderhebungsbahn insbesondere im SAG schräg nach hinten verläuft, wobei es bevorzugt ist, dass die Raderhebungsbahn zur Horizontalen im SAG einen Winkel von weniger als 90°, vorzugsweise 65° - 80° und besonders bevorzugt 70° - 75° aufweist.

## Claims

1. A suspended bicycle frame, in particular a suspended mountain bike frame, comprising
a main frame element (10),
a rear frame (12) movably connected to the main frame element (10) in order to form a suspended bicycle frame,
an upper longitudinal control arm (48) and a lower longitudinal control arm (50), each connecting the rear frame (12) to the main frame element (10), and a suspension element,
the upper longitudinal control arm (48) being pivotably connected to the main frame element (10) via an upper frame axle (52) and to the rear frame (12) via an upper rear frame axle (54),
a connecting line between the upper frame axle (52) and the upper rear frame axle (54) forming an upper polar line (70) which, in the decompressed state, extends above a dropout end (40) of the rear frame (12), and
a connecting line between a lower frame axle (64) and a lower rear frame axle (62) forming a lower polar line (72),
the lower longitudinal control arm (50) preferably being rigidly connected to a bottom bracket shell (66),
**characterized in that**
in the decompressed state, the upper polar line (70) is ascending in the direction of travel.

2. The suspended bicycle frame of claim 1, **characterized in that** the lower longitudinal control arm (50) is pivotably connected to the main frame element (10) via the lower frame axle (64) and to the rear frame (12) via the lower rear frame axle (62).

3. The suspended bicycle frame of claim 2, **characterized in that** the distance of the lower frame axle (64) to the middle axis of the bottom bracket shell (66) is from 50 mm to 100 mm, in particular from 50 to 70 mm.

4. The suspended bicycle frame of claim 2 or 3, **characterized in that** the distance between the lower frame axle (64) and the lower rear frame axle (62) is 80% to 160%, in particular 100% to 140% of a resulting suspension travel of the suspension element at the rear wheel.

5. The suspended bicycle frame of one of claims 2 to 4, **characterized in that** a connecting line between the lower frame axle (64) and the lower rear frame axle (62) forms a lower polar line (72) which in the decompressed state of the suspension forms an angle of 20° to 40°, preferably 25° to 35° with a horizontal line.

6. The suspended bicycle frame of one of claims 2 to 5, **characterized in that** the distance between the upper frame axle (52) and the upper rear frame axle (54) is from 25% to 100%, in particular from 30% to 60% of the distance between the lower frame axle (64) and the lower rear frame axle (62) and/or that the distance between the upper frame axle (52) and the upper rear frame axle (54) is between 80 mm and 150 mm.

7. The suspended bicycle frame of claim 5 or 6, **characterized in that** the upper polar line (70) forms an angle of less than 10°, in particular less than 5° with respect to the lower polar line (72), and wherein it is particularly preferred that the two polar lines (70, 72) extend parallel to each other.

8. The suspended bicycle frame of one of claims 1 to 7, **characterized in that**, in the decompressed state of the suspension, the upper polar line (70) is spaced vertically from the dropout end (40) of the rear frame (12) by more than 50% of the suspension travel of the suspension element (58) and/or by more than 60 mm.

9. The suspended bicycle frame of one of claims 1 to 8, **characterized in that**, under SAG, an overall polar line (76) forms an angle of 5° to 25°, in particular 10° to 15° with respect to a horizontal line, wherein the overall polar line (76) is formed by a line between the rear wheel axle and an intersection of the upper and lower polar lines.

10. The suspended bicycle frame of one of claims 1 to 9, **characterized in that** the lower rear frame axle (62) can be arranged within a wheel perimeter (68) of a mounted rear wheel (38).

11. The suspended bicycle frame of one of claims 1 to 10, **characterized in that** upon compression/decompression of the suspension, the two longitudinal control arms (48, 50) turn in the same direction.

12. The bicycle frame of one of claims 1 to 11, **characterized in that**, in particular under SAG, a wheel deflection trajectory extends obliquely rearward, wherein it is preferred that, under SAG, the wheel deflection trajectory forms an angle of less than 90°, preferably 65°-80° and particularly preferred 70°-75° with the horizontal line.

## Revendications

1. Cadre de bicyclette suspendu, en particulier cadre de bicyclette suspendu pour VTT, doté
d'un élément de cadre principal (10),
d'une structure arrière (12) reliée de manière mobile à l'élément de cadre principal (10) afin de configurer un cadre de bicyclette suspendu,
d'un bras longitudinal supérieur (48) et d'un bras longitudinal inférieur (50) reliant la structure arrière (12) à l'élément de cadre principal (10) et d'un élément de ressort,
dans lequel le bras longitudinal supérieur (48) est relié de manière pivotante à l'élément de cadre principal (10) par le biais d'un axe de cadre supérieur (52) et à la structure arrière (12) par le biais d'un axe de structure arrière supérieur (54), dans lequel une ligne de raccordement entre l'axe de cadre supérieur (52) et l'axe de structure arrière supérieur (54) forme une ligne directe supérieure (70), laquelle s'étend au-dessus d'une patte de cadre (40) de la structure arrière (12) à l'état détendu du ressort et dans lequel une ligne de raccordement entre un axe de cadre inférieur (64) et un axe de structure arrière inférieur (62) forme une ligne directe inférieure (72), dans lequel le bras longitudinal inférieur (50) est relié rigidement à un boîtier de pédalier (66),
**caractérisé en ce que**, à l'état détendu du ressort, la ligne directe supérieure (70) s'étend en montant dans la direction de déplacement.

2. Cadre de bicyclette suspendu selon la revendication 1, **caractérisé en ce que** le bras longitudinal inférieur (50) est relié de manière pivotante à l'élément de cadre principal (10) par le biais de l'axe de cadre inférieur (64) et à la structure arrière (12) par le biais de l'axe de structure arrière inférieur (62).

3. Cadre de bicyclette suspendu selon la revendication 2, **caractérisé en ce que** l'écart de l'axe de cadre inférieur (64) par rapport à l'axe médian du boîtier de pédalier (66) est de 50 mm à 100 mm, en particulier de 50 à 70 mm.

4. Cadre de bicyclette suspendu selon la revendication 2 ou 3, **caractérisé en ce que** l'écart de l'axe de cadre inférieur (64) et de l'axe de structure arrière inférieur (62) vaut de 80 % à 160 %, en particulier de 100 % à 140 %, d'un débattement résultant de l'élément de ressort à la roue arrière.

5. Cadre de bicyclette suspendu selon l'une des revendications 2 à 4, **caractérisé en ce qu'**une ligne de raccordement entre un axe de cadre inférieur (64) et un axe de structure arrière inférieur (62) forme une ligne directe inférieure (72), laquelle forme un angle par rapport à l'horizontale de 20° à 40°, de préférence de 25° à 35°, à l'état détendu du ressort.

6. Cadre de bicyclette suspendu selon l'une des revendications 2 à 5, **caractérisé en ce que** l'écart entre l'axe de cadre supérieur (52) et l'axe de structure arrière supérieur (54) vaut de 25 % à 100 %, en particulier de 30 % à 60 % de l'écart de l'axe de cadre inférieur (64) à l'axe de structure arrière inférieur (62) et/ou **en ce que** l'écart entre l'axe de cadre supérieur (52) et l'axe de structure arrière supérieur (54) vaut entre 80 mm et 150 mm.

7. Cadre de bicyclette suspendu selon la revendication 5 ou 6, **caractérisé en ce que** la ligne directe supérieure (70) possède par rapport à la ligne directe inférieure (72) un angle inférieur à 10°, en particulier inférieur à 5° et tout particulièrement les deux lignes directes (70, 72) sont parallèles l'une à l'autre.

8. Cadre de bicyclette suspendu selon l'une des revendications 1 à 7, **caractérisé en ce que** la ligne directe supérieure (70) possède, à l'état détendu du ressort, un écart vertical par rapport à la patte de cadre (40) de la structure arrière (12) de plus de 50 % du débattement de l'élément de ressort (58) et/ou de plus de 60 mm.

9. Cadre de bicyclette suspendu selon l'une des revendications 1 à 8, **caractérisé en ce qu'**une ligne directe totale (76) forme, en débattement négatif, un angle de 5° à 25°, en particulier 10° à 15°, par rapport à une horizontale, dans lequel la ligne directe totale (76) est formée par une ligne entre le moyeu de la roue arrière et un point d'intersection des lignes directes supérieure et inférieure.

10. Cadre de bicyclette suspendu selon l'une des revendications 1 à 9, **caractérisé en ce que** l'axe de structure arrière inférieur (62) peut être agencé à l'intérieur d'une jante (68) d'une roue arrière (38) montée.

11. Cadre de bicyclette suspendu selon l'une des revendications 1 à 10, **caractérisé en ce que** le mouvement de rotation des deux bras longitudinaux (48, 50) se fait dans le même sens lors de l'enfoncement/de la détente du ressort.

12. Cadre de bicyclette suspendu selon l'une des revendications 1 à 11, **caractérisé en ce qu'**une voie de levage des roues, en particulier en débattement négatif, est oblique vers l'arrière, dans lequel la voie de levage des roues comporte de préférence un angle par rapport à l'horizontale inférieur à 90° en débattement négatif, plus particulièrement 65° à 80° et tout particulièrement 70° à 75°.
